# EUROPEAN PATENT APPLICATION

(11) **EP 3 693 710 A2**
(43) Date of publication of application: **12.08.2020**
(21) Application number: 20155268.4
(22) Date of filing: 04.02.2020
(51) Int. Cl.: G01F 1/58, G01F 15/02, G01K 13/02

(54) **FULL BORE MAGNETIC FLOWMETER ASSEMBLY WITH TEMPERATURE SENSING ELEMENT**

(30) Priority: 08.02.2019 US 201916271718
(71) Applicant: Georg Fischer Signet LLC, El Monte, CA 91734 (US)
(72) Inventor: Ciobanu, Calin, Brea, CA 92821 (US); Lomibao, Jeffrey, La Puente, CA 91746 (US); Ford, Jerry, Placentia, CA 92870 (US); Franks, Kevin, Montclair, CA 91763 (US)
(74) Representative: Fenner, Seraina

(57) **Abstract**

A magnetic flowmeter assembly is provided having electrodes disposed about a tubular body, wherein at least one of the electrodes includes a temperature sensing element inserted therein. The magnetic flowmeter assembly is configured to measure the flow rate of fluid flowing through the tubular body. The temperature sensing element can be inserted within an electrode such that it is well heatsinked to the electrode surface in contact with the fluid flow, thus placing the temperature sensing element in effective thermal contact with the fluid. As such, the magnetic flowmeter assembly enables simultaneous measurement of the fluid flow rate and fluid temperature.

## Description

### FIELD OF THE INVENTION

The present invention relates generally to sensors for measuring fluids, more particularly, to magnetic flowmeter assemblies for flow and temperature measurement.

### BACKGROUND OF THE INVENTION

Temperature measurements are often made as secondary measurements with other types of analytical or physical probes measuring a fluid flow characteristic or property. Such temperature measurements will often be accomplished using a separate measuring element, or with a measuring device that is embedded in the internal portions of the other analytical / physical probes. Examples can include pH electrodes that include an embedded RTD or thermistor. Specifically, an RTD can be included within a capillary tube within the glass measuring element of a pH sensor. Other examples can include a thermowell, which comprises a metal tube with a temperature measuring element located within, wherein the thermowell can act as a solution ground electrode by having an electrical connection attached to it.

Flow sensor assemblies using electrodes, such as magnetic flowmeters, can benefit from measuring the temperature of the fluid with the flow rates. Benefits include using the temperature for process control, system safety, and media transport efficiency. For example, in some pumped systems operating on flow control, an increase in the downstream backpressure may result in excessive energy to be consumed by the pump(s) in order to maintain the desired flow rate. The increased energy consumption can lead to a rise in fluid temperature, which can be indicative of inefficient operating characteristics in the fluid system, i.e. inefficient energy consumption by the pump. As such, measuring the temperature at various locations in a fluid transport system provides smart temperature analysis that could lead to significant energy savings, e.g. by increased fluid media transport efficiency.

Other benefits include using temperature measurements when conducting flow diagnostics in conjunction with empty pipe information, specifically providing additional information to help distinguish between a partially or fully empty pipe. Moreover, temperature measurements can increase accuracy of the fluid flow rate measured by compensating for thermal expansion of the piping.

However, such benefits of measuring temperature with the flow rate often requires a separate means for obtaining the temperature information. One example is to use a thermowell, which requires an additional hole within the piping for inserting the thermowell, thereby increasing the risk for a leak to occur at the insertion point. Another example is to mount a probe on the outside of the piping; however, such a configuration can slow down the temperature response of the sensing element, and thereby decreases accuracy.

It should, therefore, be appreciated there remains a need for accurately measuring the temperature and fluid flow rate simultaneously that addresses these concerns. The present invention fulfills these needs and others.

### SUMMARY OF THE INVENTION

Briefly, and in general terms, a magnetic flowmeter assembly is provided having electrodes disposed about a tubular body, wherein at least one of the electrodes includes a temperature sensing element inserted therein. The magnetic flowmeter assembly is configured to measure the flow rate of fluid flowing through the tubular body. The temperature sensing element can be inserted within an electrode such that it is well heatsinked to the electrode surface in contact with the fluid flow, thus placing the temperature sensing element in effective thermal contact with the fluid. As such, the magnetic flowmeter assembly enables simultaneous measurement of the fluid flow rate and fluid temperature.

In a detailed aspect of an exemplary embodiment, the tip of the temperature sensing element can be embedded as deep as possible within the electrode, such that it is in thermal contact with a contact end of the electrode. Moreover, the electrode can include heat conductive filling to secure and retain the temperature sensing element within the electrode, to effectual thermal conductivity therebetween.

In another detailed aspect of an exemplary embodiment, the temperature sensing element is electrically coupled to an electronics assembly for determining the fluid temperature, wherein the temperature sensing element is electrically isolated from said fluid. Moreover, any electrode on a magnetic flowmeter, e.g. measuring electrode, auxiliary electrode and so on, can act as a thermowell to house a temperature sensing element that is isolated from the fluid.

In another detailed aspect of an exemplary embodiment, the magnetic flowmeter assembly is full-bore, wherein the tubular body is configured to attach inline within a fluid flow system. A pair of coil assemblies is coupled to the tubular body in an intermediate region thereof. The pair of coil assemblies is each disposed external to the tubular body on opposing sides of the body aligned along an axis (Az), to generate a magnetic field within the fluid flow path of the tubular body. A pair of measuring electrodes is attached to the tubular body, coupled to a corresponding aperture defined by the body. Each measuring electrode of the pair of electrodes is in electrical communication with the fluid within the flow path. The pair of electrodes are aligned along an axis (Ay) orthogonal to the longitudinal axis (Ax) and orthogonal to the axis (Az). A plurality of auxiliary electrodes are attached to the tubular body, including a first auxiliary electrode and a second auxiliary electrode that are disposed upstream of the pair of measuring electrodes.

For purposes of summarizing the invention and the advantages achieved over the prior art, certain advantages of the invention have been described herein. Of course, it is to be understood that not necessarily all such advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other advantages as may be taught or suggested herein.

All of these embodiments are intended to be within the scope of the invention herein disclosed. These and other embodiments of the present invention will become readily apparent to those skilled in the art from the following detailed description of the preferred embodiments having reference to the attached figures, the invention not being limited to any particular preferred embodiment disclosed.

### BRIEF DESCRIPTION OF THE DRAWINGS

Embodiments of the present invention will now be described, by way of example only, with reference to the following drawings in which:
FIG. 1 is a simplified perspective view of an electrode in accordance with the present invention, depicting a temperature element inserted within the electrode.
FIG. 2 is a simplified perspective view of a magnetic flowmeter assembly in accordance with the present invention, depicting electrodes disposed about the assembly, and that are configured with a hollow interior to receive a temperature sensing element.
FIG. 3 is a simplified diagram of a circuit for measuring the temperature of a fluid using a temperature element inserted into an electrode.
FIG. 4 is a cross sectional view of the magnetic flowmeter assembly of FIG. 2, taken along line 1 - 1 (FIG. 2).
FIG. 5 is a simplified perspective view of an electrode of a magnetic flowmeter assembly in accordance with the present invention.
FIG. 6 is a simplified perspective view of a magnetic flowmeter assembly in accordance with the present invention, including a brace coupled to a pair of coils forming magnetic circuity circumscribing the pipe.
FIG. 7 is a simplified perspective view of a magnetic flowmeter assembly of FIG. 6, further comprising a shield housing.
FIG. 8 is a cross sectional view of a magnetic flowmeter assembly in accordance with the present invention, taken along line 7-7 (FIG. 9), including a circuitry assembly coupled to a shield housing disposed about a magnetic assembly.
FIG. 9 is a cross sectional view of the magnetic flowmeter assembly of FIG. 8, taken along line 6-6.

### INCORPORATION BY REFERENCE

In certain embodiments of the present invention, the magnetic flowmeter assembly can be configured as described and claimed in Applicant's co-pending patent applications: 1) entitled "FULL BORE MAGNETIC FLOWMETER ASSEMBLY," U.S. App. No. 16/146,090, filed September 28, 2018, 2) entitled "MAGNETIC FLOWMETER ASSEMBLY HAVING INDEPENDENT COIL DRIVE AND CONTROL SYSTEM", U.S. App. No. 16/243,868, filed January 9, 2019, 3) entitled "MAGNETIC FLOWMETER WITH MEDIA CONDUCTIVITY MEASUREMENT", U.S. App. No. 16/243,980, filed January 9, 2019, and 4) entitled "MAGNETIC FLOWMETER ASSEMBLY WITH ZERO-FLOW MEASUREMENT CAPABILITY", U.S. App. No. 16/244,060, filed January 9, 2019, which are hereby incorporated by reference for all purposes.

### DETAILED DESCRIPTION OF THE PREFERRED EMBODIMENTS

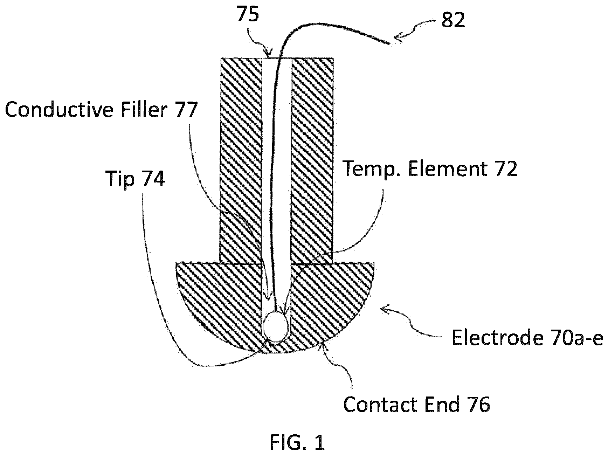

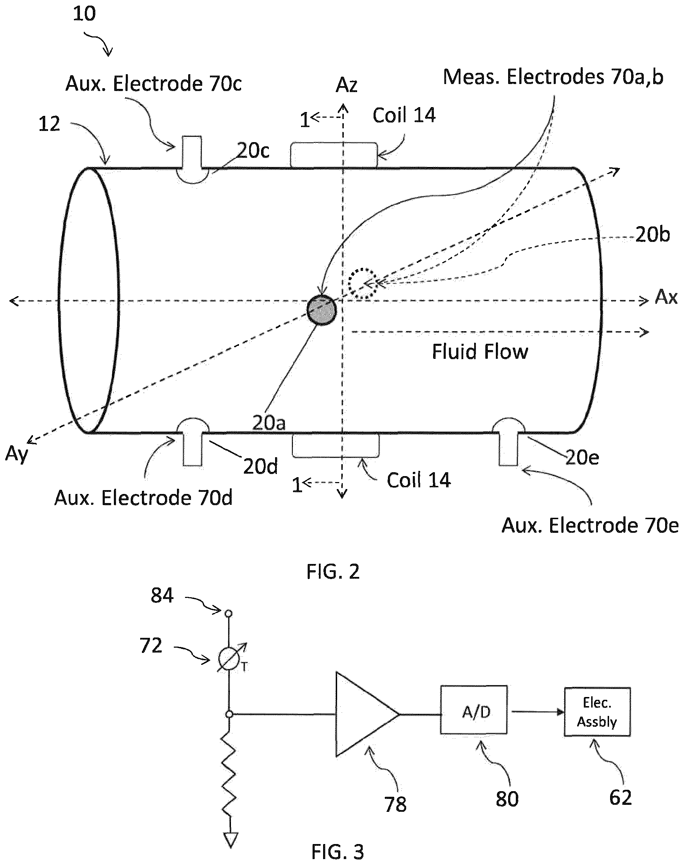

Referring now to the drawings, and particularly FIGS. 1 and 2, there is shown a magnetic flowmeter assembly 10 having electrodes (70a-e) disposed about a tubular body, wherein at least one of the electrodes includes a temperature sensing element 72 inserted therein via an opening 75. The magnetic flowmeter assembly 10 is configured to measure the flow rate of fluid flowing through the tubular body using electrodes 70 (a, b) and a pair of coil assemblies 14 that are configured to generate a magnetic field. The temperature-sensing element can be located sufficiently close to a contact end 76 of an electrode (70 a-e) so as to be well heatsinked to said contact end 76 without actual contact with the fluid flow, thereby in enabling thermal conductivity therebetween. As such, the magnetic flowmeter assembly enables simultaneous measurement of the fluid flow rate and fluid temperature.

With continued reference to FIGS. 1 and 2, a portion of the temperature sensing element 72 can remain isolated from the electrode (70 a-e) when inserted, thereby minimizing the thermal effect that the upper side of the electrode body will have on the temperature sensing element 72. Conversely, the tip 74 of the temperature sensing element can be embedded deep within the electrode, as possible, such that the temperature sensing element is located close to the contact end 76 of the electrode. The electrode is constructed with material having a high heat transfer conductivity. Moreover, a heat conductive filler 77 places the tip 74 of the temperature element in thermal contact with the contact end 76, and thereby in thermal contact with the fluid, enabling the temperature sensing element tip 74 to be well heatsinked to the contact end 76, with minimal thermal loss. The heat conductive filler 77 further enables the temperature sensing element tip 74 to be secured to the electrode, by providing retention support and strain relief. An example of a type of heat conductive filler used can include a thermally conductive 2-part epoxy, such as DIS-A-PASTE® 2008-A/B, which is designed for the potting of sensors and dissipate device generated heat.

Referring now to FIG. 3, the temperature sensing element 72 can be electrically coupled to an electronics assembly 62, which receives the temperature information from the sensing element via an instrument amplifier 78 and an analog to digital converter 80. Two wires (FIG. 1, ref. character 82) can be used to enable temperature measurement, wherein a voltage reference 84 is applied to one end of one wire 82. The temperature measurement and conversions are performed in real time such that the fluid flow rates and temperature are measured simultaneously. The actual temperature measured by the temperature sensing element 72 is reflective of the contact end 76 temperature, which in turn is reflective of the pipe temperature. The pipe temperature is resultant from the fluid temperature, ambient temperature, the internal heat dissipation of the plastic body of the pipe, which can have a heat gradient, e.g., from the electronics and magnetic flowmeter assembly, and so on. Thus, the temperature measured by the temperature sensing element 72 is reflective of the pipe temperature, enabling for temperature compensation of the fluid flow due to pipe cross-section variations (due to fluctuating temperatures). Moreover, considering the fluid flow temperature is the dominant factor affecting the pipe temperature, the temperature measured by the temperature sensing element 72 is reflective of the fluid flow temperature with a small offset, e.g., +/-2degC, as determined experimentally.

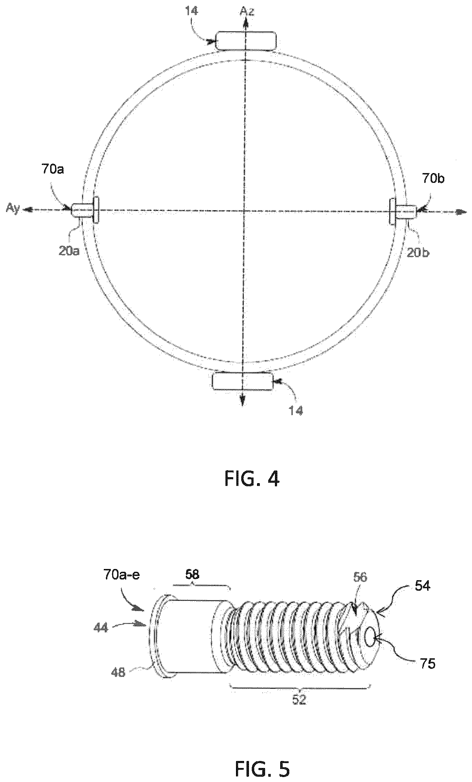

With reference now to FIGS. 2 and 4, there is shown a magnetic flowmeter assembly 10 having a tubular body, e.g., pipe, 12 that terminates in opposing open ends, aligned along a longitudinal axis (Ax), defining a fluid flow path therebetween. As aforementioned, the assembly 10 includes a pair of coil assemblies 14 coupled to an intermediate region thereof. The coil assemblies are externally coupled to the tubular body, aligned along an axis (Az) that is orthogonal to the longitudinal axis (Ax), to generate a magnetic field within the fluid flow path of the tubular body. A pair of measuring electrodes (70 a, b) are attached to the pipe 12 aligned along an axis (Ay) orthogonal to the longitudinal axis (Ax) and orthogonal to the axis (Az), in the intermediate region. The measuring electrodes 70 (a, b) are in electrical communication with the fluid within the fluid flow path. In this manner, the measuring electrodes detect voltage of the fluid induced by the magnetic field of the coil assemblies 14.

The magnetic flowmeter assembly 10 further includes a plurality of auxiliary electrodes 70 (c-e), including a first auxiliary electrode 70(c) and a second auxiliary electrode 70(d) that are disposed upstream of the pair of measuring electrodes 70 (a, b). The first and the second auxiliary electrodes are aligned with the axis (Az), on opposing sides of the pipe, such that axis (Ay) and axis (Az) are coplanar. The first and second auxiliary electrodes (70 c, d) can be used to determine the pipe as being full, empty, or partially full. A temperature sensing element disposed within the first and/or second auxiliary electrode 70 (c, d) can provide additional information that enable distinguishing between a partially or fully empty pipe. For example, a sudden change in the temperature measured, corroborated with the empty pipe detection, can improve the validity that a partially empty pipe has become totally empty. A third auxiliary electrode 70(e) can also be disposed downstream of the pair of measuring electrodes 70 (a, b). The measuring electrodes and the auxiliary electrodes are each mounted to a corresponding aperture 20 (a - e) formed in the wall of the pipe 12.

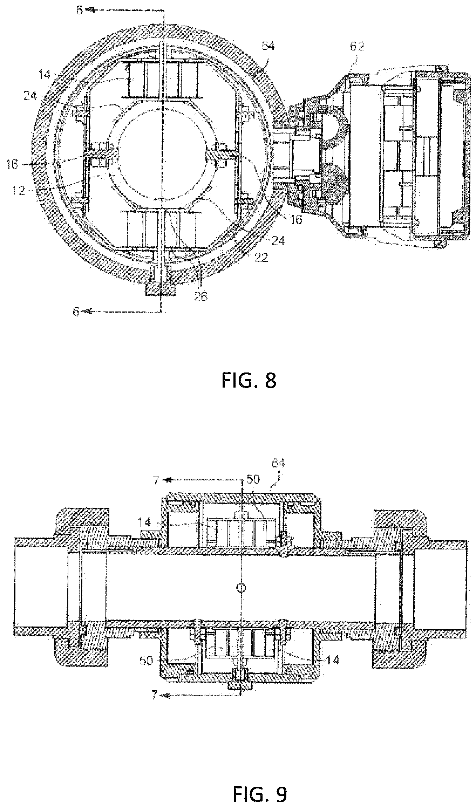

The tubular body, i.e. pipe 12, is formed of thermoplastic material, e.g., such as chlorinated polyvinyl chloride (CPVC), polyvinyl chloride (PVC), or polyvinylidene fluoride (PVDF). Preferably, the pipe is formed of the same pipe used in other portions of the fluid flow system (not shown), to include the type of pipe material (e.g., CPVC, PVC or PVDF) and size (e.g., pipe diameter). End connectors (FIG. 9) are positioned at the opposing ends of the pipe 12 to couple the assembly 10 in line along the fluid flow system.

With reference now to FIG. 5, another depiction of an exemplary electrode 70 (a-e) is depicted. Each electrode has a threaded portion 52 that terminates in a distal end 54, which includes a planar portion 56 that interrupts the threading of the threaded portion, proximate to the distal end. The threaded portion 52 extends from a cylindrical portion 58, which terminates at a proximal end 44 and includes an annular shoulder 48. Moreover, the opening 75 for inserting a temperature sensing element is located on the distal end 54 of the electrode. The flowmeter assembly can include any number of electrodes that can act as a thermowell for a temperature sensing element, including the measuring electrodes, and auxiliary electrodes.

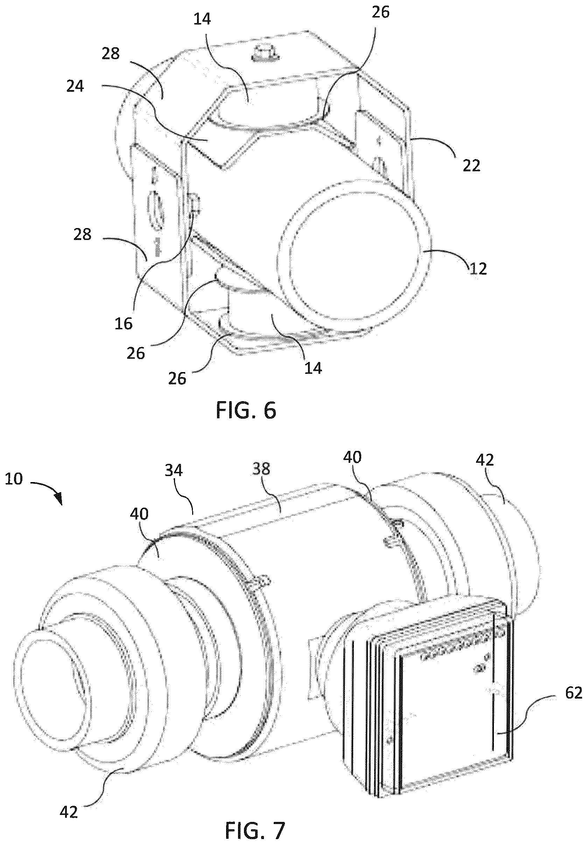

With reference now to FIG. 6, the coil assemblies 14 are coupled to the pipe 12 in an intermediate region thereof. The coil assemblies are mounted external to the pipe, aligned along the axis (Az). More particularly, each coil 14 is held in place by a brace 22 that circumscribes the pipe 12. A magnetic pole 24 is disposed between the coil 14 and the pipe. The magnetic pole is formed of conductive material, e.g., metal same as the magnetic brace, soft magnetic Carbon Steel with Fe% > 99.4, and shaped to conform about the pipe. Non-conductive (airgap) shims 26 are disposed on opposing ends of the coils. With each coil, a first airgap shim 26 is sandwiched between the coil and the corresponding magnetic pole 24, and a second airgap shim 26 is sandwiched between the coil and the brace 22. Moreover, measuring electrodes 16 can be secured to the pipe 12. In each coil, there is a core 50 (FIG. 9) made of a material with good magnetic properties. These cores 50 (FIG. 9) are transferring the flux lines from the coils into the pole shoes and the magnetic brace.

The brace 22 further serves as magnetic circuitry for the magnetic field generated by the coils 14. The brace has a generally octagonal shape, which benefits assembly and operation of the assembly 10. More particularly, the brace 22 is formed of two, generally c-shaped components 28 that slidably mate with each other about the pipe, to couple to each other. In this manner, the brace 22 can be used on pipes having different diameters. Attachments (e.g., bolts) couple the coils to the brace along the axis (Az).

The assembly 10 is configured to generate a strong alternating magnetic field (flux) B that is distributed evenly over the pipe cross-section. Utilizing an alternating magnetic field avoids electrode material migration. Configuration of the brace 22, e.g., including shape and materials, facilitates the resulting magnetic field (flux) B within the pipe 12. In the exemplary embodiment, the brace 22 is formed of "soft" magnetic materials, which refers to relative permeability, meaning it has no remnant magnetization when shut down.

With reference now to FIG. 7, the assembly 10 further includes a housing 34 configured to protect the magnetic field generator (which includes the coils 14 and the brace 22). The housing 34 includes a body shell 38 and pipe-sealed flanges 40 on opposing ends thereof. In some embodiments, the housing can be formed of a pipe having a greater diameter than the primary pipe 12. The housing 34 is configured to protect the magnetic field generator from environmental exposure. Fitting 42 are used to couple the assembly 12 to adjoining pipes (not shown) in the fluid flow system.

With reference now to FIGS. 8 and 9, a magnetic flowmeter assembly is shown, having similar features as discussed above. The assembly includes an electronics assembly 62 attached to the housing 64 of the assembly. The electronics assembly is in electrical communication with the electrodes 16 and the coils 14 of the assembly so as to operate the assembly. The electronics assembly 62 can be detachably attached to any location about the housing 64, thereby providing flexibility in its orientation for a given customer application.

In a method of manufacture, a pipe 12 is selected having the same parameters of other portions of the fluid flow system. The pipe is cut to a prescribed length (L) to accommodate the desired location of the sensor assembly 10 within the fluid flow system. Then, apertures 20 (a-e) are drilled in the pipe at the desired locations of the electrodes. The electrodes 70 (a-e) are then mounted in place.

It should be appreciated from the foregoing that the invention provides a magnetic flowmeter assembly having electrodes disposed about a tubular body, wherein at least one of the electrodes includes a temperature sensing element inserted therein. The magnetic flowmeter assembly is configured to measure the flow rate of fluid flowing through the tubular body using electrodes and a pair of coil assemblies that are configured to generate a magnetic field. The temperature sensing element can be located sufficiently close to a contact end of an electrode so as to be well heatsinked to said contact end without actual contact with the fluid flow. As such, the magnetic flowmeter assembly enables simultaneous measurement of the fluid flow rate and fluid temperature.

The present invention has been described above in terms of presently preferred embodiments so that an understanding of the present invention can be conveyed. However, there are other embodiments not specifically described herein for which the present invention is applicable. Therefore, the present invention should not to be seen as limited to the forms shown, which is to be considered illustrative rather than restrictive.

## Claims

1. A full bore magnetic flowmeter assembly, comprising:
a tubular body having opposing open ends and defining a fluid flow path therebetween along a longitudinal axis (Ax), the tubular body attaches inline within a fluid flow system;
a pair of coil assemblies coupled to the tubular body configured to generate a magnetic field within the fluid flow path of the tubular body;
a plurality electrodes attached to the tubular body to be in electrical communication with a fluid within the flow path, a first electrode of the plurality of electrodes comprising an electrode body defining a hollow interior; and
a temperature sensing element inserted within the hollow interior of the first electrode, the temperature sensing element having a tip embedded within the electrode body proximate to a contact end of the first electrode body, the contact end positioned to contact with the fluid within the flow path, enabling the temperature sensing element to measure the temperature of the fluid.

2. The magnetic flowmeter assembly as defined in claim 1, the electrode body further comprising a heat conductive filler coupled to the contact end, such that the heat conductive filler secures the temperature sensing element and minimizes any applied stress thereto.

3. The magnetic flowmeter assembly as defined in claim 1, wherein the temperature sensing element is electrically coupled to an electronics assembly for determining and displaying the fluid temperature.

4. The magnetic flowmeter assembly as defined in claim 1, wherein the first electrode is a measuring electrode configured to provide input for determining the flow rate of the fluid within the flow path.

5. The magnetic flowmeter assembly as defined in claim 1, wherein the first electrode is an auxiliary electrode configured with the temperature sensing element to determine whether the tubular body is fully empty.

6. The magnetic flowmeter assembly as defined in claim 1, wherein the tubular body is formed of thermoplastic material.

7. The magnetic flowmeter assembly as defined in claim 1, wherein the tubular body is formed of thermoplastic material selected from a group consisting of CPVC, PVC, and PVDF.

8. The magnetic flowmeter assembly as defined in claim 1, further comprising a brace that circumscribes the tubular body and that is operatively coupled to the pair of coil assemblies, serving as magnetic circuitry for the magnetic field generated.

9. The magnetic flowmeter assembly as defined in claim 8, wherein the brace comprises two c-shaped components that slidably mate with each other about the pipe, to couple to each other.

10. The magnetic flowmeter assembly as defined in claim 8, wherein the pair of coil assemblies are attached to the brace along the axis (Az) via attachment assemblies.

11. The magnetic flowmeter assembly as defined in claim 8, further comprising a protective housing disposed about the brace.

12. The magnetic flowmeter assembly as defined in claim 11, further comprising an electronics assembly coupled to the protective housing and in electrical communication with the plurality of electrodes and temperature sensing element, the electronics assembly configured to determine and output the measured flow rate and temperature simultaneously.

13. The magnetic flowmeter assembly as defined in claim 12, wherein the electronics assembly is configured to be detachably coupled to any location about the protective housing, so as to provide flexibility in conforming to the spatial requirements of the tubular body.

14. The magnetic flowmeter assembly as defined in claim 1, wherein the tip of the temperature sensing element is spaced apart from the fluid within the flow path.

15. The magnetic flowmeter assembly as defined in claim 14, wherein the tip of the temperature sensing element is held in place in relative to the contact end by a heat conductive filler, in particular, the heat conductive filler is a thermally conductive 2-part epoxy.
